# EUROPEAN PATENT APPLICATION

(11) **EP 3 068 174 A1**
(43) Date of publication of application: **14.09.2016**
(21) Application number: 13898502.3
(22) Date of filing: 05.12.2013
(51) Int. Cl.: H04W 52/02

(54) **ENERGY SAVING METHOD AND APPARATUS FOR HETEROGENEOUS NETWORK**

(71) Applicant: Huawei Technologies Co., Ltd., Longgang District Shenzhen, Guangdong 518129 (CN)
(72) Inventor: ZHENG, Chuangming, Shenzhen Guangdong 518129 (CN); WU, Jianming, Shenzhen Guangdong 518129 (CN)
(74) Representative: Goddar, Heinz J.
(86) International application number: PCT/CN2013/088641
(87) International publication number: WO 2015/081531

(57) **Abstract**

Embodiments of the present invention provide an energy-saving method and apparatus for a heterogeneous network. The energy-saving method for a heterogeneous network includes: performing traffic detection on a cluster, where the cluster includes at least one first network device configured to provide a capacity enhanced network resource (10); and migrating a service in the cluster to a second network device if traffic of the cluster does not exceed a first preset threshold, and turning off the first network device in the cluster, where the second network device is configured to provide a coverage-type network resource, and network coverage of the first network device is within network coverage of the second network device (20). By means of the energy-saving method and apparatus for a heterogeneous network that are provided in the embodiments of the present invention, energy-saving processing on a heterogeneous network is implemented and a resource waste is avoided.

## Description

### TECHNICAL FIELD

Embodiments of the present invention relate to communications technologies, and in particular, to an energy-saving method and apparatus for a heterogeneous network.

### BACKGROUND

A heterogeneous network (Heterogeneous Network, HetNet for short) is a future-oriented innovative mobile broadband network architecture and includes cells of different sizes and types, where the cells may include a macro cell (macro cell), a micro cell (micro cell), a pico cell (pico cell), and a femto cell (femto cell). The HetNet coordinately deploys the key components in 2G/3G/4G wireless infrastructure, so that these network components work cooperatively, which provides a high data throughput, powerful mobility, and a high-quality user experience, and completely meets a requirement of a mobile broadband user on performance of a 2G/3G/4G network.

HetNet networking is obviously characterized in that for a traffic hotspot area, there are network devices of different standards or different station-types performing repeated network coverage on a same area. The repeated network coverage can provide a better network service, but a resource waste exists to some extent. Therefore, a networking energy-saving method desperately needs to be put forward, so as to avoid a resource waste without affecting user experience.

### SUMMARY

Embodiments of the present invention provide an energy-saving method and apparatus for a heterogeneous network, so as to avoid a resource waste.

According to a first aspect, an embodiment of the present invention provides an energy-saving method for a heterogeneous network, including:
performing traffic detection on a cluster, where the cluster includes at least one first network device configured to provide a capacity enhanced network resource; and
migrating a service in the cluster to a second network device if traffic of the cluster does not exceed a first preset threshold, and turning off the first network device in the cluster, where the second network device is configured to provide a coverage-type network resource, and network coverage of the first network device is within network coverage of the second network device.

In a first possible implementation manner, the migrating a service in the cluster to a second network device if traffic of the cluster does not exceed a first preset threshold is specifically:
within a preset time, if traffic of the cluster within a first preset time range does not exceed the first preset threshold, migrating the service in the cluster to the second network device.

With reference to the first aspect or the first possible implementation manner of the first aspect, in a second possible implementation manner, the migrating a service n the cluster to a second network device is specifically:
determining first location information of the cluster, determining the second network device according to the first location information, and if the second network device can bear the service on the cluster, migrating the service in the cluster to the second network device.

In a third possible implementation manner, the energy-saving method for a heterogeneous network further includes:
performing traffic detection on the second network device; and
if traffic of the second network device within a second preset time range exceeds a second preset threshold, determining second location information of the second network device, determining the cluster according to the second location information, and if the first network device in the cluster is in an off state, turning on the first network device in the cluster, so as to offload the second network device.

According to a second aspect, an embodiment of the present invention provides an energy-saving apparatus for a heterogeneous network, including:
a first detection unit, configured to perform traffic detection on a cluster, where the cluster includes at least one first network device configured to provide a capacity enhanced network resource; and
a first processing unit, connected to the first detection unit, configured to: migrate a service in the cluster to a second network device if traffic of the cluster does not exceed a first preset threshold, and turn off the first network device in the cluster, where the second network device is configured to provide a coverage-type network resource, and network coverage of the first network device is within network coverage of the second network device.

In a first possible implementation manner, the first processing unit is further configured to: within a preset time, if traffic of the cluster within a first preset time range does not exceed the first preset threshold, migrate the service in the cluster to the second network device.

With reference to the second aspect or the first possible implementation manner of the first aspect, in a second possible implementation manner, the first processing unit is further configured to: determine first location information of the cluster, determine the second network device according to the first location information, and if the second network device can bear the service on the cluster, migrate the service in the cluster to the second network device.

In a third possible implementation manner, the energy-saving apparatus for a heterogeneous network further includes:
a second detection unit, configured to perform traffic detection on the second network device; and
a second processing unit, connected to the second detection unit, configured to: if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

According to a third aspect, an embodiment of the present invention provides an energy-saving apparatus for a heterogeneous network, including:
a memory, configured to store an instruction; and
a processor, coupled to the memory, where the processor is configured to execute the instruction stored in the memory, and the processor is configured to: perform traffic detection on a cluster, where the cluster includes at least one first network device configured to provide a capacity enhanced network resource; and if traffic of the cluster does not exceed a first preset threshold, migrate a service in the cluster to a second network device, and turn off the first network device in the cluster, where the second network device is configured to provide a coverage-type network resource, and network coverage of the first network device is within network coverage of the second network device.

In a first possible implementation manner, the processor is further configured to: within a preset time, if traffic of the cluster within a first preset time range does not exceed the first preset threshold, migrate the service in the cluster to the second network device.

With reference to the third aspect or the first possible implementation manner of the third aspect, in a second possible implementation manner, the processor is further configured to: determine first location information of the cluster, determine the second network device according to the first location information, and if the second network device can bear the service on the cluster, migrate the service in the cluster to the second network device.

In a third possible implementation manner, the processor is further configured to: perform traffic detection on the second network device; and if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

As can be known from the foregoing technical solutions, according to the energy-saving method and apparatus for a heterogeneous network that are provided in the embodiments of the present invention, the energy-saving apparatus for a heterogeneous network performs traffic detection on a cluster, where a cluster includes at least one first network device configured to provide a capacity enhanced network resource; if traffic of the cluster does not exceed a first preset threshold, migrates a service in the cluster to a second network device; and turns off the first network device in the cluster, where the second network device is configured to provide a coverage-type network resource, and network coverage of the first network device is within network coverage of the second network device. By performing traffic detection on the cluster providing the capacity enhanced network resource, when the cluster bears no much service traffic, the service is migrated to the corresponding second network device configured to provide the coverage-type network resource, and the cluster is turned off, thereby implementing energy-saving processing on a heterogeneous network and avoiding a resource waste.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an energy-saving method for a heterogeneous network according to an embodiment of the present invention;
FIG. 2 is a flowchart of another energy-saving method for a heterogeneous network according to an embodiment of the present invention;
FIG. 3 is a schematic structural diagram of a first energy-saving apparatus for a heterogeneous network according to an embodiment of the present invention;
FIG. 4 is a schematic structural diagram of a second energy-saving apparatus for a heterogeneous network according to an embodiment of the present invention; and
FIG. 5 is a schematic structural diagram of a third energy-saving apparatus for a heterogeneous network according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

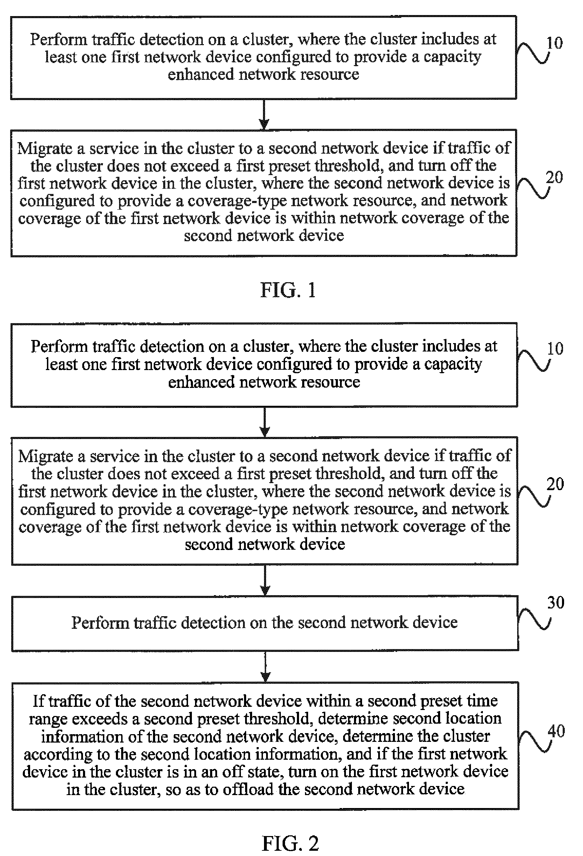

FIG. 1 is a flowchart of an energy-saving method for a heterogeneous network according to an embodiment of the present invention. As shown in FIG. 1, the energy-saving method for a heterogeneous network provided in this embodiment may be specifically applied to an energy-saving processing process of a heterogeneous network HetNet. The heterogeneous network specifically includes multiple first network devices and multiple second network devices. The first network device is configured to provide a capacity enhanced network resource and the second network device is configured to provide a coverage-type network resource. The second network device may be specifically a macro base station and the first network device may be specifically a small cell. The energy-saving method for a heterogeneous network provided in this embodiment may be specifically performed by using an energy-saving apparatus for a heterogeneous network. The energy-saving apparatus for a heterogeneous network may be specifically the second network device or a server in the heterogeneous network.

The energy-saving method for a heterogeneous network provided in this embodiment specifically includes:
Step 10: Perform traffic detection on a cluster, where the cluster includes at least one first network device configured to provide a capacity enhanced network resource.
Step 20: Migrate a service in the cluster to a second network device if traffic of the cluster does not exceed a first preset threshold, and turn off the first network device in the cluster, where the second network device is configured to provide a coverage-type network resource, and network coverage of the first network device is within network coverage of the second network device.

Specifically, the heterogeneous network may be divided into multiple monitored areas according to a geographical location, so as to detect service traffic of at least two clusters in each monitored area. When the heterogeneous network is divided into multiple monitored areas, for each monitored area, multiple first network devices and multiple second network devices are set in the monitored area. The multiple first network devices in the monitored area may be divided into multiple clusters (cluster) in advance according to geographical locations of the first network devices. Each cluster includes at least one first network device. For example, the cluster may specifically include all first network devices in one storied building, or all first network devices in multiple storied buildings, or a first network device in an outdoor area. The clusters may be obtained by performing specific division according to an actual networking situation, which is not limited to this embodiment. The energy-saving apparatus for a heterogeneous network may be implemented by using the second network device in the monitored area or may be implemented by using another network element in the monitored area.

The energy-saving apparatus for a heterogeneous network detects service traffic of all clusters in the monitored area. For each cluster, if traffic of the cluster does not exceed the first preset threshold, it indicates that the cluster bears not much service traffic. Then, the service in the cluster is migrated to one or more second network devices in the monitored area, and each first network device in the cluster is turned off, so as to implement energy saving.

A process in which the energy-saving apparatus for a heterogeneous network detects the service traffic of all clusters in the monitored area may be specifically that the energy-saving apparatus for a heterogeneous network may detect the service traffic of the clusters by using a preset detection period. For example, the detection period may be at a minute level, an hour level, or the like. A working time of the energy-saving apparatus for a heterogeneous network may be further preset. For example, the energy-saving apparatus for a heterogeneous network may be set to work in a period of time from evening to next morning or during a holiday; or the energy-saving apparatus for a heterogeneous network may be performing traffic detection on a cluster all the time. However, the detected traffic is determined and corresponding turn-off processing is performed on the cluster within a preset time, where the preset time is specifically, for example, a period of time from evening to next morning or a holiday. A working manner of the energy-saving apparatus for a heterogeneous network may be set according to an actual network energy-saving requirement, which is not limited to this embodiment.

According to the energy-saving method for a heterogeneous network provided in this embodiment, the energy-saving apparatus for a heterogeneous network performs traffic detection on a cluster, where the cluster includes at least one first network device configured to provide a capacity enhanced network resource; if traffic of the cluster does not exceed a first preset threshold, migrates a service in the cluster to a second network device; and turns off the first network device in the cluster, where the second network device is configured to provide a coverage-type network resource, and network coverage of the first network device is within network coverage of the second network device. By performing traffic detection on the cluster providing the capacity enhanced network resource, when the cluster bears not much service traffic, the service is migrated to the corresponding second network device configured to provide the coverage-type network resource, and the cluster is turned off, thereby implementing energy-saving processing on a heterogeneous network and avoiding a resource waste.

In this embodiment, in step 20, the migrating a service in the cluster to a second network device if traffic of the cluster does not exceed a first preset threshold may be specifically:
within a preset time, if traffic of the cluster within a first preset time range does not exceed the first preset threshold, migrating the service in the cluster to the second network device.

Specifically, for example, in a range covered by a monitored area, buildings are mostly office buildings. When users are at work, traffic of services borne by the network devices in the monitored area is relatively large. However, after the users are off work or when the users are on a holiday, the traffic of the services borne by the network devices in the monitored area is relatively small, and the preset time may be set to a period of time from evening to next morning or a holiday. To avoid that the energy-saving apparatus for a heterogeneous network frequently turns on and turns off the cluster, the traffic of the cluster within the first preset time range may be detected. The first preset time range may be set to, but is not limited to, half an hour, an hour or the like according to an actual requirement.

In this embodiment, in step 20, the migrating a service in the cluster to a second network device is specifically:
determining first location information of the cluster, determining the second network device according to the first location information, and if the second network device can bear the service on the cluster, migrating the service in the cluster to the second network device.

Specifically, the first location information is used to indicate a location of the cluster, and network coverage provided by the second network device that is determined according to the location of the cluster should be not less than network coverage provided by the cluster, so as to ensure reliability of service migration. Determining whether the migration of the service in the cluster to the second network device causes a capacity of the second network device to be limited is determining whether the second network device can bear the service on the cluster. If the capacity of the second network device is relatively sufficient, the service in the cluster is migrated to the second network device, so as to migrate a user resident on and connected to the cluster to the second network device. After the migration is completed, the first network device in the cluster is turned off.

FIG. 2 is a flowchart of another energy-saving method for a heterogeneous network according to an embodiment of the present invention. As shown in FIG. 2, in this embodiment, the energy-saving method for a heterogeneous network may further include:
Step 30: Perform traffic detection on the second network device.
Step 40: If traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

Specifically, the energy-saving apparatus for a heterogeneous network may perform traffic detection on all second network devices in a monitored area. To avoid that the energy-saving apparatus for a heterogeneous network frequently turns on and turns off the cluster, the traffic of the cluster within the second preset time range may be detected. The second preset time range may be set to, but is not limited to, half an hour, an hour or the like according to an actual requirement. If the traffic of the second network device within the second preset time range exceeds the second preset threshold, it indicates that the traffic of the service borne by the second network device is relatively large. Then, the second location information of the second network device is determined, where second location information is used to indicate a location of the second network device. The cluster is determined according to the location of the second network device, and network coverage provided by the determined cluster is specifically within network coverage provided by the second network device. If the first network device in the determined cluster is in an off state, the first network device is turned on, so as to implement service offloading of the second network device.

When a heterogeneous network is in an initial state, each cluster may be in an off state. In a case in which the traffic of the service borne by the second network device is relatively large, a corresponding cluster is turned on.

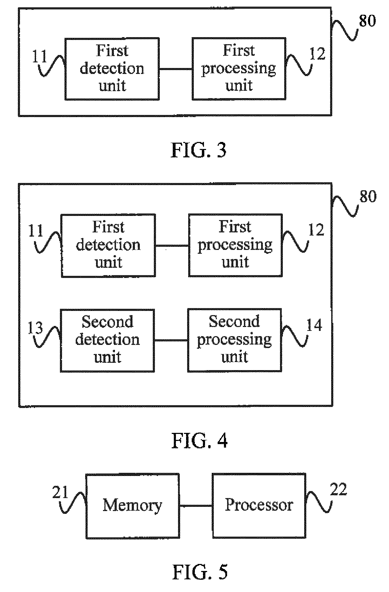

FIG. 3 is a schematic structural diagram of a first energy-saving apparatus for a heterogeneous network according to an embodiment of the present invention. As shown in FIG. 3, the energy-saving apparatus 80 for a heterogeneous network provided in this embodiment may specifically implement steps of an energy-saving method for a heterogeneous network provided in any embodiment of the present invention. Details are not described herein again. The energy-saving apparatus 80 for a heterogeneous network provided in this embodiment specifically includes a first detection unit 11 and a first processing unit 12. The first detection unit 11 is configured to perform traffic detection on a cluster, where the cluster includes at least one first network device configured to provide a capacity enhanced network resource; and the first processing unit 12, connected to the first detection unit 11, is configured to: migrate a service in the cluster to a second network device if traffic of the cluster does not exceed a first preset threshold, and turn off the first network device in the cluster, where the second network device is configured to provide a coverage-type network resource, and network coverage of the first network device is within network coverage of the second network device.

According to the energy-saving apparatus 80 for a heterogeneous network provided in this embodiment of the present invention, the first detection unit 11 performs traffic detection on a cluster, where the cluster includes at least one first network device configured to provide a capacity enhanced network resource; and if traffic of the cluster does not exceed a first preset threshold, the first processing unit 12 migrates a service in the cluster to a second network device and turns off the first network device in the cluster, where the second network device is configured to provide a coverage-type network resource, and network coverage of the first network device is within network coverage of the second network device. By performing traffic detection on the cluster providing the capacity enhanced network resource, when the cluster bears not much service traffic, the service is migrated to the corresponding second network device configured to provide the coverage-type network resource, and the cluster is turned off, thereby implementing energy-saving processing on a heterogeneous network and avoiding a resource waste.

In this embodiment, the first processing unit 12 may be further configured to: within a preset time, if traffic of the cluster within a first preset time range does not exceed the first preset threshold, migrate the service in the cluster to the second network device. By setting the preset time and the first preset time range, processing of the energy-saving apparatus 80 for a heterogeneous network is more specific to an actual requirement, and frequent turn-off and turn-on actions on the cluster performed by the energy-saving apparatus 80 for a heterogeneous network are avoided.

In this embodiment, in this embodiment, the first processing unit 12 may be further configured to: determine first location information of the cluster, determine the second network device according to the first location information, and if the second network device can bear the service in the cluster, migrate the service in the cluster to the second network device.

FIG. 4 is a schematic structural diagram of a second energy-saving apparatus for a heterogeneous network according to an embodiment of the present invention. As shown in FIG. 4, in this embodiment, the energy-saving apparatus 80 for a heterogeneous network may further include a second detection unit 13 and a second processing unit 14, where the second detection unit 13 is configured to perform traffic detection on the second network device; and the second processing unit 14, connected to the second detection unit 13, is configured to: if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

FIG. 5 is a schematic structural diagram of a third energy-saving apparatus for a heterogeneous network according to an embodiment of the present invention. As shown in FIG. 5, the energy-saving apparatus for a heterogeneous network provided in this embodiment may specifically implement steps of an energy-saving method for a heterogeneous network provided in any embodiment of the present invention. Details are not described herein again. The energy-saving apparatus for a heterogeneous network provided in this embodiment specifically includes a memory 21 and a processor 22, where the memory 21 is configured to store an instruction; and the processor 22 is coupled to the memory 21, where the processor 22 is configured to execute the instruction stored in the memory 21, and the processor 22 is configured to: perform traffic detection on a cluster, where the cluster includes at least one first network device configured to provide a capacity enhanced network resource, if traffic of the cluster does not exceed a first preset threshold, migrate a service in the cluster to a second network device, and turn off the first network device in the cluster, where the second network device is configured to provide a coverage-type network resource, and network coverage of the first network device is within network coverage of the second network device.

According to the energy-saving apparatus for a heterogeneous network provided in this embodiment, the processor 22 performs traffic detection on a cluster, where the cluster includes at least one first network device configured to provide a capacity enhanced network resource; if traffic of the cluster does not exceed a first preset threshold, migrates a service in the cluster to the second network device; and turns off the first network device in the cluster, where the second network device is configured to provide a coverage-type network resource, and network coverage of the first network device is within network coverage of the second network device. By performing traffic detection on the cluster providing the capacity enhanced network resource, when the cluster bears not much service traffic, the service is migrated to the corresponding second network device configured to provide the coverage-type network resource, and the cluster is turned off, thereby implementing energy-saving processing on a heterogeneous network and avoiding a resource waste.

In this embodiment, the processor 22 is further configured to: within a preset time, if traffic of the cluster within a first preset time range does not exceed the first preset threshold, migrate the service in the cluster to the second network device.

In this embodiment, the processor 22 is further configured to: determine first location information of the cluster, determine the second network device according to the first location information, and if the second network device can bear the service on the cluster, migrate the service in the cluster to the second network device.

In this embodiment, the processor 22 is further configured to: perform traffic detection on the second network device; and if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An energy-saving method for a heterogeneous network, comprising:
performing traffic detection on a cluster, wherein the cluster comprises at least one first network device configured to provide a capacity enhanced network resource; and
migrating a service in the cluster to a second network device if traffic of the cluster does not exceed a first preset threshold, and turning off the first network device in the cluster, wherein the second network device is configured to provide a coverage-type network resource, and network coverage of the first network device is within network coverage of the second network device.

2. The energy-saving method for a heterogeneous network according to claim 1, wherein the migrating a service in the cluster to a second network device if traffic of the cluster does not exceed a first preset threshold is specifically:
within a preset time, if traffic of the cluster within a first preset time range does not exceed the first preset threshold, migrating the service in the cluster to the second network device.

3. The energy-saving method for a heterogeneous network according to claim 1 or 2, wherein the migrating a service in the cluster to a second network device is specifically:
determining first location information of the cluster, determining the second network device according to the first location information, and if the second network device can bear the service in the cluster, migrating the service in the cluster to the second network device.

4. The energy-saving method for a heterogeneous network according to claim 1, further comprising:
performing traffic detection on the second network device; and
if traffic of the second network device within a second preset time range exceeds a second preset threshold, determining second location information of the second network device, determining the cluster according to the second location information, and if the first network device in the cluster is in an off state, turning on the first network device in the cluster, so as to offload the second network device.

5. An energy-saving apparatus for a heterogeneous network, comprising:
a first detection unit, configured to perform traffic detection on a cluster, wherein the cluster comprises at least one first network device configured to provide a capacity enhanced network resource; and
a first processing unit, connected to the first detection unit, configured to: migrate a service in the cluster to a second network device if traffic of the cluster does not exceed a first preset threshold, and turn off the first network device in the cluster, wherein the second network device is configured to provide a coverage-type network resource, and network coverage of the first network device is within network coverage of the second network device.

6. The energy-saving apparatus for a heterogeneous network according to claim 5, wherein the first processing unit is further configured to: within a preset time, if traffic of the cluster within a first preset time range does not exceed the first preset threshold, migrate the service in the cluster to the second network device.

7. The energy-saving apparatus for a heterogeneous network according to claim 5 or 6, wherein the first processing unit is further configured to: determine first location information of the cluster, determine the second network device according to the first location information, and if the second network device can bear the service on the cluster, migrate the service in the cluster to the second network device.

8. The energy-saving apparatus for a heterogeneous network according to claim 5, further comprising:
a second detection unit, configured to perform traffic detection on the second network device; and
a second processing unit, connected to the second detection unit, configured to: if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.

9. An energy-saving apparatus for a heterogeneous network, comprising:
a memory, configured to store an instruction; and
a processor, coupled to the memory, wherein the processor is configured to execute the instruction stored in the memory, and the processor is configured to: perform traffic detection on a cluster, wherein the cluster comprises at least one first network device configured to provide a capacity enhanced network resource; and if traffic of the cluster does not exceed a first preset threshold, migrate a service in the cluster to a second network device, and turn off the first network device in the cluster, wherein the second network device is configured to provide a coverage-type network resource, and network coverage of the first network device is within network coverage of the second network device.

10. The energy-saving apparatus for a heterogeneous network according to claim 9, wherein the processor is further configured to: within a preset time, if traffic of the cluster within a first preset time range does not exceed the first preset threshold, migrate the service in the cluster to the second network device.

11. The energy-saving apparatus for a heterogeneous network according to claim 9 or 10, wherein the processor is further configured to: determine first location information of the cluster, determine the second network device according to the first location information, and if the second network device can bear the service on the cluster, migrate the service in the cluster to the second network device.

12. The energy-saving apparatus for a heterogeneous network according to claim 9, wherein the processor is further configured to: perform traffic detection on the second network device; and if traffic of the second network device within a second preset time range exceeds a second preset threshold, determine second location information of the second network device, determine the cluster according to the second location information, and if the first network device in the cluster is in an off state, turn on the first network device in the cluster, so as to offload the second network device.
